# EUROPÄISCHE PATENTSCHRIFT

(11) **EP 2 482 504 B1**
(45) Veröffentlichungstag und Bekanntmachung des Hinweises auf die Patenterteilung: **25.02.2015**
(21) Anmeldenummer: 12151725.4
(22) Anmeldetag: 19.01.2012
(51) Int. Cl.: H04L 12/801, H04L 12/841

(54) **Verfahren zum Verarbeiten von Datenfragmenten zu Datenpaketen**
Method for transforming data fragments into data packets
Procédé de traitement de fragments de données en fragments de données

(30) Priorität: 15.06.2011 DE 102011104195; 01.02.2011 EP 11152899
(43) Veröffentlichungstag der Anmeldung: 01.08.2012
(73) Patentinhaber: Deutsches Zentrum für Luft- und Raumfahrt e.V., 51147 Köln (DE)
(72) Erfinder: Párraga Niebla, Christina, 82319 Starnberg (DE); Lazaro Blasco, Francisco, 80807 München (DE); Del Bianco, Alessandro, 82234 Wessling (DE)
(74) Vertreter: Von Kreisler Selting Werner - Partnerschaft von Patentanwälten und Rechtsanwälten mbB

(56) Entgegenhaltungen:
- "Digital Video Broadcasting (DVB); Generic Stream Encapsulation (GSE) Protocol European Broadcasting Union Union Européenne de Radio-Télévision EBUÜER; ETSI TS 102 606", IEEE, LIS, SOPHIA ANTIPOLIS CEDEX, FRANCE, Bd. BC, Nr. V1.1.1, 1. Oktober 2007 (2007-10-01), XP014039829, ISSN: 0000-0001
- MORTON L CIAVATTONE G RAMACHANDRAN AT&T LABS S SHALUNOV INTERNET2 J PERSER VERIWAVE A: "Packet Reordering Metrics; rfc4737.txt", 20061101, 1. November 2006 (2006-11-01), XP015048706, ISSN: 0000-0003
- COLLEEN SHANNON ET AL: "Beyond Folklore: Observations on Fragmented Traffic", IEEE / ACM TRANSACTIONS ON NETWORKING, IEEE / ACM, NEW YORK, NY, US, Bd. 10, Nr. 6, 1. Dezember 2002 (2002-12-01), XP011077202, ISSN: 1063-6692

## Beschreibung

Die Erfindung betrifft ein Verfahren zum Verarbeiten von Datenfragmenten zu Datenpaketen. Insbesondere betrifft die Erfindung ein Verfahren zum Verarbeiten von Seitens eines Empfängers eines (z. B. Drahtlos-) Kommunikationssystems empfangenen Datenfragmenten von von einer Vielzahl von Sendern des Kommunikationssystems in Datenfragmente unterteilten und unkoordiniert gesendeten Datenpaketen, Als ein Anwendungsbeispiel zur Nutzung eines derartigen Kommunikationssystems sei ein Fahrzeugflottenmanagementsystem genannt, bei dem die Fahrzeuge laufend ihrer aktuellen Positionen und/oder andere Parameter an eine Zentrale melden.

Eine Designgrundlage für Kommunikationsprotokolle in Kommunikationssystemen und -netzen bildet das sogenannte OSI-(Open-System-Interconnec-tion-)Referenz-(Schichten-)modell. Die Aufgaben der Kommunikation sind dabei in sieben hierarchisch aufeinander aufbauenden Schichten (layers) unterteilt, In den gemäß dem OSI-Schichtenmodell organisierten Kommunikationssystemen werden Daten, die aus höheren Schichten stammen, gemäß dem OSI-Modell zwecks Übertragung auf die niedrigeren Schichten abwärtstransponiert, typischerweise in Form von Meldungen oder Paketen. Die Protokolle jeder Schicht erfassen das Paket der nächsthöheren Schicht und kapseln es in sein eigenes Meldungs-Format ein, wobei Steuerinformation in Form eines Headers (oder eventuell eines Footers) hinzugefügt wird, die dem Empfänger ermöglicht, die Meldung auf der entsprechenden Schicht zu entkapseln. Auf den niedrigeren Schichten werden Einkapselungsverfahren angewendet, die ein effizientes Senden der Daten in der Ressource der Physical Layer ermöglichen. Wenn ein Paket der nächsthöheren Schicht länger ist als die Nutzdaten einer Meldung der niedrigeren Schicht, müssen Pakete in Teile fragmentiert werden, die in die Länge der Nutzdaten der niedrigeren Schicht passen. Das auf der niedrigeren Schicht verwendete Einkapselungsverfahren muss hinreichende Mechanismen bieten, um zu ermöglichen, das fragmentierte Paket der nächsthöheren Schicht empfängerseitig korrekt wieder zusammenzusetzen. Dennoch können um der Wiederverwendung reifer Technologien willen, womit auch eine Reduzierung von Entwicklungskosten einhergeht, Einkapselungsverfahren, die fur ein Kommunikationssystem A entwickelt worden sind, in einem unterschiedlichen Kommunikationssystem B unter mehreren Annahmen verwendet werden, die von dem Kommunikationssystem A nicht vollständig erfüllt sind. In diesem Fall wird die Leistungsfähigkeit des am Empfänger erfolgenden Wiederzusammenfugens des Pakets beeinträchtigt.

In diesem Kontext bietet die Erfindung eine einfache Lösung zur Anwendung eines Einkapselungsverfahrens, das unter der Annahme arbeitet, dass Fragmente des gleichen Pakets empfängerseitig in richtiger Reihenfolge geliefert werden, in einem Kommunikationssystem, das empfängerseitig keine Lieferung von Fragmenten in richtiger Reihenfolge garantiert.

Eine beispielhafte Anwendung ist das bereits spezifizierte, fur die Norm DVB-RCS NG vorgesehene, jedoch noch nicht veröffentlichte RLE- (Return Link Encapsulation) Einkapselungsverfahren über ein Radio Access Interface, bei dem das E-SSA- (Enhanced Spread Spectrum Aloha) Zugriffsschema implementiert ist. Das RLE-Einkapselungsverfahren implementiert in seinem Protokoll-Header Features zum Signalisieren des Fragment-Typs, die in als PPDU bezeichnet sind, wobei die ersten beiden Bits des Headers, das Bit S (START) und das Bit E (END), wie folgt ausgelegt sind:

| **PPDU-Typ** | **S- und** | **Beschreibung** |
|---|---|---|
| | **E-Bits** | |
| FULL PPDU | S = 1 | Die Nutzdaten führen ein unfragmentiertes Pa- |
| | E = 1 | ket. |
| START PPDU | S = 1 | Die Nutzdaten fuhren ein erstes Fragment eines |
| | E = 0 | Pakets. |
| CONTINUATION | S = 0 | Die Nutzdaten führten ein Fragment, das die Fort- |
| PPDU | E = 0 | setzung des vorherigen Fragments ist. |
| END PPDU | S = 0 | Die Nutzdaten führen das letzte Fragment des |
| | E = 1 | Pakets. |

Folglich ist es in dem Fall, dass ein Paket in N > 3 Fragmente fragmentiert ist, nicht möglich, aufgrund der Information in dem RLE-Header einen Rückschluss auf die Reihenfolge der Fortsetzungs-Fragmente zu ziehen, falls die Fragmente nicht in richtiger Reihenfolge geliefert werden. Dieses Einkapselungsverfahren ist für ein Kommunikationssystem konzipiert, bei dem die Fragmente, wie bei der Norm DVB-RCS NG vorgesehen, in richtiger Reihenfolge an den Empfänger geliefert werden, so dass bei einem derartigen System keine Ambiguität auftritt.

Es sei angenommen, dass dieses Einkapselungsverfahren bei einem Kommunikationssystem angewandt wird, das empfängerseitig eine in richtiger Reihenfolge durchgeführte Zufuhr von Fragmenten von der Physical Layer zu dem "Entkapseler" nicht garantieren kann, der das Paket wieder zusammensetzt. Beispielsweise kann ein derartiges System das E-SSA in der Physical Layer verwenden. E-SSA basiert auf dem Spread-Spectrum-Aloha- (SSA) Zugriffsschema. In der Praxis ist senderseitig das Verhalten eine Variation von Spread Aloha, Die Innovation von E-SSA in Bezug auf SSA liegt auf der Empfängerseite vor, wobei Interferenzlöschungstechniken angewandt werden, um die Leistungsfähigkeit hinsichtlich eines korrekten Empfangs zu verbessern. Bei der Interferenz-Löschung hängt die Zeit zum korrekten Demodulieren des Signals, um ein Datenfragment an den Link Layer zu liefern von dem Maß an Interferenzen ab, denen jedes Fragment ausgesetzt ist. Dies kann dazu führen, dass ein Fragment A, das zeitlich vor dem Fragment B gesendet wurde, an dem Empfänger möglicherweise zeitlich nach dem Fragment B korrekt dekodiert wird, falls das Fragment A ein höheres Maß an Interferenz erlitten hat als das Fragment B. Sieht man diese Situation generell bei Paketen als gegeben an, die in N Fragmente > 3 fragmentiert werden, so ist anzunehmen, dass das Protokoll eines Kommunikationssystems, für das Erfindung vorgesehen ist, in Hinblick auf ein korrektes Wiederzusammensetzen fragmentierter Pakete generell durch Ambiguität beeinträchtigt ist.

Um diese Ambiguität beim Wiederzusammensetzen zu vermeiden, sind bei anderen Protokollen Vorkehrungen zum Paket-Sortieren implementiert, z.B. eine Sequenz-Nummer wie in dem TCP-Header.

Die meisten Kommunikationsprotokolle, die eine Paket-Fragmentierung stützen, bieten Lösungsansätze zum unzweideutigen Sortieren von Fragmenten des gleichen Pakets der nächsthöheren Schicht, und zwar durch Nummerieren der Fragmente. Beispielsweise umfasst das TCP-Protokoll in seinem Header ein Feld mit der Bezeichnung "Sequenz-Nummer", das die Reihenfolge angibt, in der die Fragmente des Pakets der nächsthöheren Schicht wieder zusammengesetzt werden sollten.

Bei IPv4-Netzen ist vorgesehen, dass, wenn die der Verbindungsschicht zugeordnete Maximum Transmission Unit (MTU) kürzer ist als das zu sendende IP-Paket, der Sender das IP-Paket auf der IP-Schicht fragmentiert, d.h. er erzeugt aus dem IP-Paket eine Anzahl von IP-Fragmenten mit einer Länge, die gleich derjenigen oder kleiner als diejenige der gegebenen MTU ist. Bei jedem IP-Fragment wird das Flag "mehr Fragmente" auf "1" gesetzt, und das Feld "Fragment-Versatz" wird auf den Versatz gesetzt, mit dem das aktuelle Fragment in Bezug auf das Original-IP-Paket startet. Das Flag "mehr Fragmente" zeigt dem Empfänger an, dass das empfangene Paket tatsächlich ein Fragment ist, und das Feld "Fragment-Versatz" zeigt an, wie die Fragmente sortiert werden sollen. In der Literatur sind Algorithmen beschrieben, die Verfahren zum IP-Paket-Wiederzusammensetzen angeben, um die Puffer-Belegung zu minimieren.

Bei ATM-Netzen müssen Pakete der nächsthöheren Schicht fragmentiert werden, um sie an die ATM-Zellen der nächstniedrigeren Schicht anzupassen. In diesem Fall wird das Sortieren der Fragmente mit Hilfe eines Header-Felds erzielt, welches das Fragment eindeutig identifiziert (siehe CA 2,296,086), Der Großteil der Literatur konzentriert sich jedoch auf Algorithmen zum effizienten Wiederzusammensetzen von Paketen hinsichtlich der Puffer- oder Speicher-Verwendung. Die Vorkehrungen zum Sortieren von Paketen sind ohnehin in dem Protokoll-Header mit einer Fragment-Identifizierung versehen, die ein eindeutiges Identifizieren der Sequenz der Fragmente ermöglicht (siehe DE 697 36 713 T2),

Andere Systeme, wie z.B. DVB-RCS NG, erfordern keinerlei Sortiermechanismus, da die Zufuhr von Paketen der nächstniedrigeren Schicht zu der Wiederzusammensetz-Funktion an dem Entkapseler aufgrund der Merkmale der zugrundeliegenden Protokolle angefordert wird. Anzumerken ist, dass im Fall von DVB-RCS NG das Einkapselungsverfahren in das Anfügen eines "Sequenz-Nummer"-Footing am Ende eines END-Pakets erlaubt. Diese Sequenz-Nummer jedoch wird nicht zum Sortieren von Fragmenten verwendet, sondern zum Durchführen einer Wiederzusammensetz-Fehlerkontrolle, und kann durch einen CRC ersetzt werden.

In der Literatur sind jedoch keine Verfahren aufgeführt, mittels derer Fragmente in dem Fall sortiert werden können, dass das Protokoll-Header-Feld keine hinreichende Information bietet, um die Pakete auch dann korrekt zu sortieren, wenn diese nicht in richtiger Reihenfolge am Empfänger eintreffen.

Im Stand der Technik existieren Verfahren zum Sortieren von Fragmenten und zum Wiederzusammensetzen von Paketen auf der Basis folgender Annahmen:
- Entweder bietet der Fragment-Header hinreichende Information zum erfolgreichen Wiederzusammensetzen des Pakets, so dass keine Ambiguität hinsichtlich der Reihenfolge von Fragmenten besteht, oder
- die niedrigeren Schichten geben in richtiger Reihenfolge befindliche Fragmente auf der Basis der Merkmale der zugrundeliegenden Protokolle oder des Netzes in die Zusammensetz-Funktion ein, z.B. bei Satellitensystemen, bei denen keine zwischengeschalteten Router existieren, mit denen bewirkt werden könnte, dass unterschiedliche Fragmente des gleichen Pakets über unterschiedliche Pfade geleitet werden.

Nachteiligerweise ist in der Literatur kein Verfahren und keine Vorrichtung aufgeführt, mit dem bzw. der Fragmente zum Wiederzusammensetzen sortiert werden könnten, wenn die Fragmente möglicherweise unsortiert an den End-Empfänger geliefert werden und die Protokoll-Header keine hinreichende Information zum eindeutigen Identifizieren der Sequenz von Fragmenten des gleichen Pakets enthalten.

SCALISE, S., [u.a]: System design for pan-European MSS services in S-band. In: Advanced satellite multimedia systems conference and the 11th signal processing for space communications workshop (Conference Proceedings), 2010, Seiten 538-545. ISBN 978-1-4244-6831-7 beschreibt ein Kommunikationssystem für paneuropäische mobile Satellitendienste, bei dem vorgesehen ist, größere Pakete zu fragmentieren. Weiter wird das für DVB-RCS NG standardisierte "RLE"-Einkapselungsverfahren eingesetzt. Für den Return-Link ist u.a. "Enhanced Spread Spectrum Aloha" vorgesehen, bei dem ein Algorithmus zur seriellen Interference Cancellation zum Einsatz kommt.

Aus "Digital Video Broadcasting (DVB); Generic Stream Encapsulation (GSE) Protocol European Broadcasting Union Union Européenne de Radio-Télévision; ETSI TS 102 606", IEEE, LIS, SOPIA ANTIPOLIS CEDEX, FRANCE, Bd. BC, Nr. V1.1.1, 1. Oktober 2007 (2007-10-01), XP014039829, ISSN: 0000-0001, ist ein Verfahren zur Verarbeitung von zu Datenpaketen zusammenzusetzenden Datenfragmenten bekannt, wobei die Datenfragmente von einer Vielzahl von Sendern eines Kommunikationssystems versendet und von einem Empfänger des Kommunikationssystems in Form von Empfangssignalen empfangen werden, die im Empfänger demoduliert und anschließend zu den Datenfragmenten zusammengesetzt werden. Dabei weist jedes Datenfragment neben Nutzdaten auch Steuerdaten auf, die die Gesamtlänge des Datenpakets, den Sender des Datenfragments und das Datenpaket selbst identifizieren und darüber hinaus angeben, ob es sich bei dem Datenfragment um das erste und/oder um das letzte Datenfragment oder um ein mittleres Datenfragment zwischen dem ersten und dem letzten Datenfragment des Datenpakets handelt. Die zu einem Datenpaket gehörenden Datenfragmente werden nach ihrer Demodulation im Empfänger zwischengespeichert, bis sämtliche Datenfragmente eines Datenpakets empfangen worden sind. Dabei wird überprüft, ob ein demoduliertes bzw. empfangenes Datenfragment Steuerdaten und Nutzdaten aufweist, die identisch sind mit den Steuerdaten und den Nutzdaten eines bereits zuvor empfangenen bzw. demodulierten Datenfragments. In einem solchen Fall wird das bereits empfangene bzw. demodulierte Datenfragment unberücksichtigt gelassen. Außerdem wird bei dem bekannten Verfahren festgestellt, ob zu einem Datenpaket gehörende Datenfragmente fehlen bzw. noch nicht vom betreffenden Empfänger empfangen worden sind.

Aufgabe der Erfindung ist es, ein Kommunikationssystem zu schaffen, das bezüglich des korrekten Ordnens von empfangenen Datenfragmenten zuverlässig ist.

Zur Lösung dieser Aufgabe wird mit der Erfindung ein Verfahren zum Verarbeiten von seitens eines Empfängers eines Kommunikationssystems empfangenen Datenfragmenten von seitens einer Vielzahl von Sendern des Kommunikationssystems in die Datenfragmente unterteilten und gesendeten Datenpaketen durch Demodulation der die Datenfragmente enthaltenen Empfangssignale und durch Zusammenführung der empfangenen, zu einem gemeinsamen Datenpaket gehörenden Datenfragmente vorgeschlagen, wobei jedes Datenfragment neben Nutzdaten auch Steuerdaten aufweist, die die Gesamtlänge (nachfolgend mit Total_Length bezeichnet) des Datenpakets, den Sender (nachfolgend mit Tx_ID bezeichnet) des Datenfragments sowie das Datenpaket (nachfolgend mit Frag_ID bezeichnet) selbst identifizieren und die darüber hinaus angeben, ob es sich bei dem Datenfragment um das erste und/oder um das letzte Datenfragment oder um ein mittleres Datenfragment zwischen dem ersten und dem letzten Datenfragment des Datenpakets handelt, und wobei die zeitliche Reihenfolge, in der die Datenfragmente von dem Empfänger empfangen werden, verschieden sein kann von der zeitlichen Reihenfolge, in der die Datenfragmente nach der Demodulation des Empfangssignals vorliegen, wobei bei dem Verfahren
- in dem Empfänger in den Steuerdaten jedes Datenfragments eine den Zeitpunkt (nachfolgend mit T bezeichnet) des Empfangs des betreffenden Datenfragments repräsentierende Information abgelegt wird,
- die zu einem gemeinsamen Datenpaket eines Senders gehörenden Datenfragmente durch Zwischenspeicherung gesammelt werden, bis sämtliche Datenfragmente des Datenpakets empfangen sind,
- aus den empfangenen Datenfragmenten anhand der Steuerdaten die zu einem gemeinsamen Datenpaket eines Senders gehörenden Datenfragmente zusammengesetzt werden und
- diese Datenfragmente auf Basis ihrer jeweiligen Empfangszeitpunkte (T) zur Bildung des Datenpakets zeitlich sortiert werden.

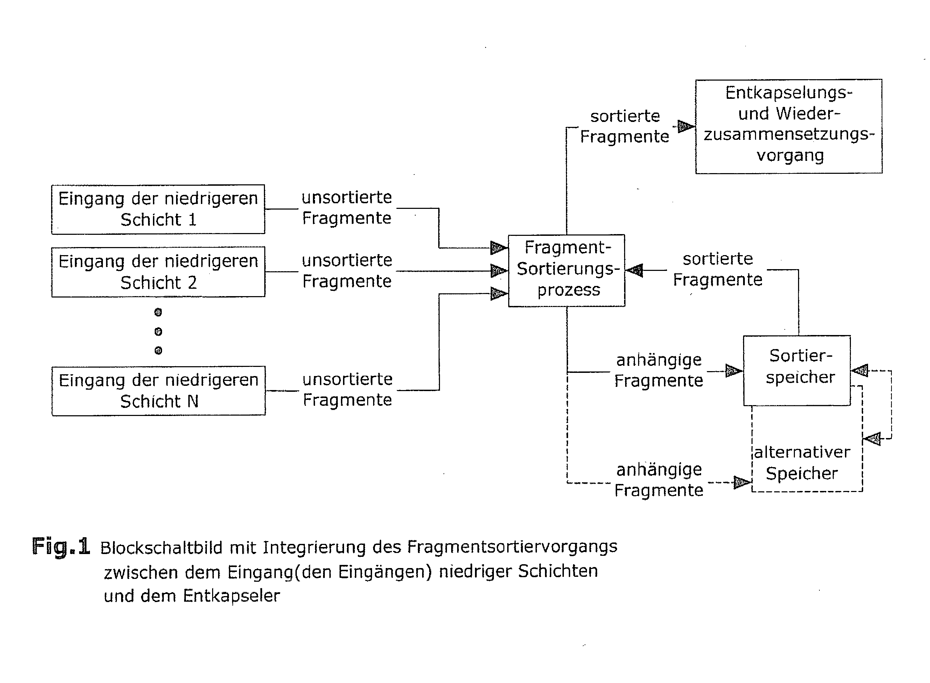

Mit der hier vorgelegten Erfindung wird ein empfängerseitig zu implementierendes Verfahren angegeben, das ein Sortieren der von der Physical Layer zugeführten Fragmente ermöglicht, bevor diese dem RLE-Entkapseler zugeführt werden, der das Paket wieder zusammensetzt. Fig. 1 zeigt ein Blockschaltbild zur Veranschaulichung der Erfindung. Bei dem Fragmentsortiervorgang gemäß Fig. 1 werden dem Vorgang Fragmente zugeführt, die von der niedrigeren Schicht her zugeführt werden, und der Vorgang führt die sortierten Fragmente dem Entkapselungs- und Wiederzusammensetz-Vorgang zu.

Generell müssen gemäß der Erfindung die folgenden Bestandteile die im Anschluss an diese aufgeführten Erfordernisse erfüllen:
a) die Vorrichtung, welche die unsortierten Fragmente (Eingangssignal(e) niedrigerer Schichten, z.B. E-SSA-Demodulator) an den Paketsortiermechanismus zuführt:
   - Diese Vorrichtung muss jedem Fragment einen Zeitstempel hinzufügen, der angibt, zu welchem zeitlichen Moment das Fragment an dem Demodulator eingetroffen ist.
b) das Einkapselungs-/Entkapselungs-Protokoll:
   - In diesem Protokoll muss ein Header-Feld vorgesehen sein, das ein Identifizieren der Quelle des Fragments ermöglicht (z.B. MAC-Adresse des Senders);
   - in dem Protokoll muss ein Header-Feld vorgesehen sein, mittels dessen identifiziert werden kann, welche Fragmente zum gleichen Paket gehören;
   - bei der Identifizierung des Pakets, zu dem die Fragmente gehören, soll ein gewisses Maß an Unbestimmtheit zulässig sein.

Es wird ein Kommunikationssystem betrachtet, bei dem eine Paket-Fragmentierung implementiert ist, das jedoch in dem Protokoll-Header keine hinreichende Information bietet, um die Reihenfolge von Fragmenten des gleichen Pakets und/oder Duplikate irgendeines Fragments, die von unterschiedlichen Eingängen der nächstniedrigeren Schicht zugeführt werden können (z.B. aufgrund von Mehrwege-Übertragung), unzweideutig zu identifizieren. Das letztere kann allerdings dann identifiziert werden, wenn eine gemeinsame Benutzung der System-Ressourcen in irgendeiner Variation von CDMA-Zugriffs-Schemata mit Frequenz-Neuverwendung von 1 erfolgt, insbesondere bei Sendern, die sich in überlappenden Versorgungsbereichen von mehr als einer Zelle pro Satellitenstrahl befinden.

Fig. 1 zeigt ein Beispiel eines Flussdiagramms der empfängerseitig implementierten Vorgänge hinsichtlich des Wiederzusammensetzens der Fragmente, die von den Eingängen niedrigerer Schichten zugeführt werden. Die von dem Eingang (den Eingängen) niedriger Schichten zugeführten unsortierten Fragmente, die aus einem Header, Nutzdaten und eventuell einem Footer bestehen, werden dem Fragmentsortiervorgang zugeführt, der den Gegenstand der vorliegenden Erfindung bildet. Durch den Fragmentsortiervorgang werden die Fragmente, die dem gleichen Paket der nächsthöheren Schicht zugehören, korrekt in richtiger Reihenfolge gebracht. Wenn in dem Fragmentsortiervorgang sämtliche Fragmente eines Pakets der nächsthöheren Schicht empfangen und sortiert worden sind, werden sie (in richtiger Reihenfolge) dem Entkapselungs- und Wiederzusammensetz-Vorgang zugeführt, um wieder zusammengesetzt zu werden.

Der Fragmentsortiervorgang basiert auf der folgenden Information:
- einem Zeitstempel, der von der niedrigeren Schicht einem jeden Fragment zugewiesen wird, wobei der Zeitstempel den zeitlichen Moment angibt, in dem das Fragment an dem Empfänger eingetroffen ist. Um der Kürze willen wird der Zeitstempel hier als *T* angegeben.
- einer Quellen-Identifizierung an jedem Fragment-Header, d.h. eine eindeutige Identifizierung des Senders. Dies kann z.B, eine MAC-Adresse sein, die auch dem Empfänger bekannt ist. Um der Kurze willen wird diese Identifizierung als *Tx_ID* angegeben.
- einer Paket-Identifizierung an jedem Fragment-Header, d.h. eine Identifizierung des Original-Pakets der nächsthöheren Schicht, wobei mittels dieser Identifizierung darauf rückgeschlossen werden kann, dass eine Anzahl von Fragmenten zu dem gleichen Original-Paket der nächsthöheren Schicht gehört, das von einem bestimmten Sender stammt. Für diese Identifizierung ist ein bestimmtes Maß an Unbestimmtheit zulässig. Um der Kürze willen wird diese Identifizierung als *Frag_ID* angegeben.
- Ein speziell zugewiesenes Flag ist in dem Fragment-Header nur aktiv, falls das Fragment das FIRST-Fragment des Pakets der nächsthöheren Schicht ist. Um der Kürze willen wird dieses Flag als *FIRST_flag* angegeben.
- Ein speziell zugewiesenes Flag ist in dem Fragment-Header nur aktiv, falls das Fragment das END-Fragment des Pakets der nächsthöheren Schicht ist. Um der Kürze willen wird dieses Flag als *END-flag* angegeben.
- Die *FIRST_*- und *END_*-Flags sind beide gleichzeitig nur aktiv, falls das Fragment das einzige Fragment des Pakets der nächsthöheren Schicht ist (ein Fall eines unfragmentierten Pakets).
- In dem Fragment-Header ist ein Feld enthalten, das die Länge des Original-Pakets angibt. Um der Kürze willen wird dieses Header-Feld angegeben als Total_Length.

Somit können Fragmente des gleichen Pakets der nächsthöheren Schicht, die von einem bestimmten Sender kommen, durch das Paar *[Tx_ID, Frag_ID]* identifiziert werden, das im Folgenden als ID_Vector bezeichnet wird. Unterschiedliche Fragmente aus dem gleichen Paket der nächsthöheren Schicht vom gleichen Sender können durch den Zeitstempel differenziert werden. Somit kann jedes Fragment, das von einem Eingang der nächstniedrigeren Schicht zugeführt wird, durch das folgende Triplet charakterisiert werden: *[Tx_ID, Frag_ID, T]*, das im folgenden als TID_Vector bezeichnet wird. Es ist anzumerken, dass der ID_Vector eine Komponente des TID_Vector ist. Somit ist der ID_Vector in dem TID-Vector enthalten. Die ID_- and TID-Vektoren eines Fragments 'j' werden bezeichnet als ID_Vector(j) = *[Tx_I(j), Frag_ID(j)]* bzw. als TID_Vector(j) = *[Tx_ID(j), Frag_ID(j), T(j)]*.

In dem Fall, dass duplizierte Fragmente durch verschiedene Eingänge einer unteren Schicht in den Fragmentsortiervorgang eingegeben werden (z.B. in dem Fall, dass die Frequenz-Wiederverwendung von 1 angewandt wird und jeder Eingang einer unteren Schicht einer Zelle bzw, einem Satellitenstrahl entspricht), ist folgendes zu beachten:
- Duplizierte Fragmente werden von mehr als einem Eingang einer unteren Schicht dem Fragmentsortiervorgang mit gleichem Zeitstempel zugeführt (Die Zeitstempel können voneinander marginal abweichen, und zwar abhängig davon, wie groß die Auflösung des Zeitstempels ist. Die Auflösung des Zeitstempels sollte gleich der Dauer eines Physical Layer Frames sein. Wenn die Zeitstempelauflösung feiner ist als die Dauer eines Physical Layer Frames, dürfen die Zeitstempel bis zu der Dauer eines Physical Layer Frames abweichen.);
- Die duplizierten Fragmente können dem Fragmentsortiervorgang durch verschiedene Eingänge einer unteren Schicht zu verschiedenen Zeitpunkten zugeführt werden, selbst falls der Zeitstempel gleich ist.

Der Fragmentsortiervorgang wird von einem Sortierspeicher unterstützt, in dem Fragmente gespeichert werden, bis sämtliche Fragmente vorhanden sind, die zum Wiederzusammensetzen eines Pakets der nächsthöheren Schicht erforderlich sind. Zusätzlich kann ein alternativer Speicher installiert werden, um Optimierungs-Algorithmen zu implementieren, mittels derer eine intelligente Verwendung alter oder duplizierter Fragmente gemacht werden kann (Nutzung von Diversität), wie Fig. 1 zeigt. Die gestrichelten Linien repräsentieren optionale Wege, die für die Erfindung nicht notwendig sind.

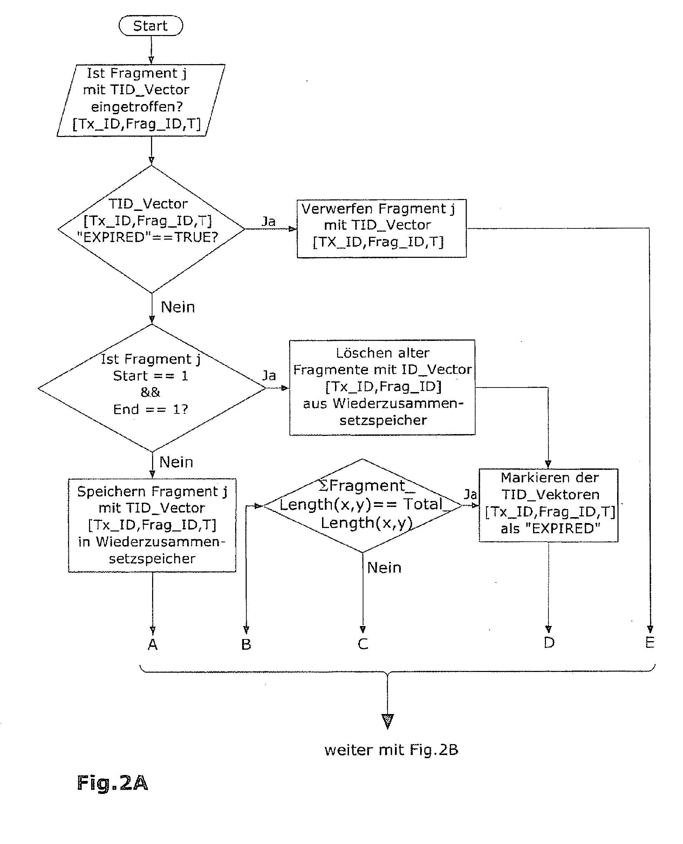

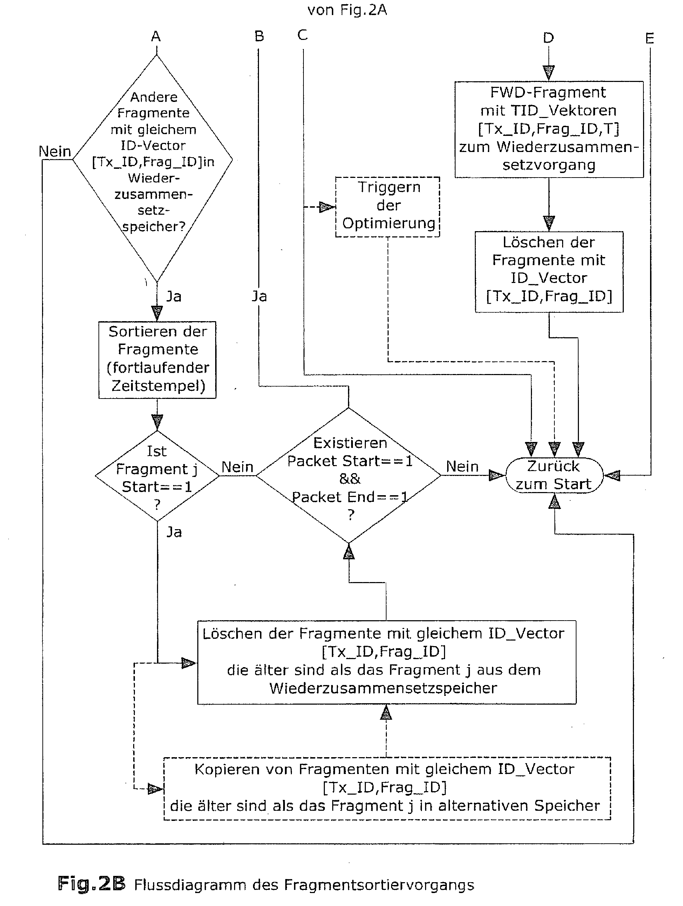

Fig. 2 zeigt ein Flussdiagramm des Fragmentsortiervorgangs gemäß einem Ausführungsbeispiel der Erfindung.

Der Vorgang läuft wie folgt ab:
1. Für jedes Fragment 'j' ,das dem Fragmentsortiervorgang von irgendeinem der Eingänge der nächstniedrigeren Schicht zugeführt wird, werden sein ID_Vector und TID_Vector identifiziert: [TX_ID,Frag_ID] bzw. [TX_ID,Frag_ID,T].
2. In dem Sortiervorgang wird geprüft, ob der TID-Vektor des Fragments 'j' bereits in dem Sortierspeicher existiert (TID vector [Tx_ID,Frag_ID,T]== "EXPIRED"):
   a) Falls Tx_ID,Frag_ID,T]== "EXPIRED", wird das Fragment 'j' verworfen (der Ordnungsvorgang interpretiert dieses Fragment dahingehend, dass es ein nutzloses Duplikat ist, da das Original (oder ein anderes Duplikat) bereits erfolgreich dem Vorgang des Wiederzusammensetzens zugeführt wurde), und der Vorgang geht zurück auf (1), den Startpunkt, und auf weitere Fragmente zu warten.
   b) Falls [Tx_ID,Frag_ID,T] ∼= "EXPIRED", rückt der Sortiervorgang auf (3).
3. In dem Sortiervorgang wird geprüft, ob das Fragment 'j' ein unfragmentiertes Paket ist, d.h. es wird geprüft, ob in dem Fragment-Header *START_flag* == 1 und *END_flag* == 1 ist.
   a) Falls (*START_flag* == 1) UND (*END_flag* == 1), werden sämtliche Fragmente mit dem gleichen ID_Vector [TX_ID,Frag_ID] wie das Fragment 'j', d.h. [TX_ID,Frag_ID] = [TX_ID(j),Frag_ID(j)], aus dem Sortierspeicher gelöscht, und der Vorgang rückt auf Schritt (4).
   b) Falls (*START_flag* == 0) ODER (*END_flag* == 0), interpretiert das Sortierverfahren dies dahingehend, dass das Fragment 'j' einem fragmentierten Paket entspricht; das Fragment 'j' wird in dem Sortierspeicher in Zuordnung zu seinem TID_Vector gespeichert;
4. Der TID_Vector bzw, die TID_-Vektoren des verbleibenden Fragments bzw. der verbleibenden Fragmente, die in dem Sortierspeicher derart gespeichert sind, dass [Tx_ID,Frag_ID,T] == [Tx_ID(j),Frag_ID(j),T(j)], werden als "EXPIRED" markiert, d.h. [Tx_ID,Frag_ID,T] = "EXPIRED"; die entsprechenden Fragmente werden dem Wiederzusammensetzvorgang zugeführt und aus dem Sortierspeicher gelöscht, Dann geht der Vorgang auf Schritt (1), den Startpunkt, um auf weitere Fragmente zu warten.
5. In dem Sortiervorgang wird geprüft, ob in dem Sortierspeicher weitere Fragmente mit dem gleichen ID_Vector wie bei dem Fragment 'j' gespeichert sind.
   a) Falls dies zutrifft, werden sämtliche Fragmente, die in dem Sortierspeicher mit dem gleichen ID_Vector wie das Fragment 'j' gespeichert sind, entsprechend den fortschreitenden Zeitstempeln sortiert, was in dem TID_Vector der geprüften Fragmente enthalten ist, und der Vorgang rückt auf Schritt (6).
   b) Andernfalls geht der Vorgang zurück auf Schritt (1), den Startpunkt, um auf weitere Fragmente zu warten.
6. In dem Sortiervorgang wird geprüft, ob *START_flag* == 1 in dem Header des Fragments 'j' gegeben ist.
   a) Falls *START_flag* == 1, werden die Fragmente in dem Sortierspeicher mit dem gleichen ID_Vector wie das Fragment 'j', die einen älteren Zeitstempel als das Fragment 'j' haben, aus dem Sortierspeicher entfernt (sie werden als veraltet angesehen). Zusätzlich können die Fragmente, bevor sie aus dem Sortierspeicher entfernt werden, in einem alternativen Speicher gespeichert werden (falls ein solcher existiert), um zusätzliche Optimierungen vorzunehmen, z.B. zu ermöglichen, dass Diversitäts- oder Redundanzverfahren die Paketfehlerraten-Leistungsfähigkeit in fehleranfälligen Links verbessern. Derartige Optimierungsverfahren sind nicht Teil der Erfindung.
   b) Falls *START_flag* ~= 1, rückt der Sortiervorgang auf Schritt (7).
   In dem Sortiervorgang wird geprüft, ob unter den Fragmenten, die in dem Sortierspeicher mit dem gleichen ID_Vector wie bei dem Fragment 'j' gespeichert sind, ein Fragment mit *START_flag* == 1 und ein weiteres Fragment mit *END_flag* == 1 existieren.
   a) Falls ein Fragment mit (ID_Vector = [TX_ID,Frag_ID], UND *START_flag* == 1) UND ein weiteres Fragment mit (ID_Vector = [TX_ID,Frag_ID], AND *END_flag* == 1) existieren, rückt der Sortiervorgang auf Schritt (8).
   b) Andernfalls geht der Sortiervorgang auf Schritt (1), den Startpunkt, um auf weitere Fragmente zu warten.
8. In dem Sortiervorgang wird geprüft, ob die Summe der Längen der Fragmente, die in dem Sortierspeicher mit dem gleichen ID_Vector wie bei dem Fragment 'j' gespeichert sind, gleich dem Wert ist, der in dem Header-Feld "Total_Length" der Header der Fragmente angegeben ist.
   a) Falls Σfragment_length(ID_Vector) == Total_length(ID_Vector) gilt, rückt der Sortiervorgang auf Schritt (4).
   b) Andernfalls geht der Sortiervorgang auf Schritt (1), den Startpunkt, um auf weitere Fragmente zu warten. Alternativ kann vorgesehen sein, dass, falls Optimierungsverfahren wie z.B. Diversitäts- oder Redundanzverfahren implementiert werden, um die die Paketfehlerraten-Leistungsfähigkeit in fehleranfälligen Links verbessern, der Vorgang das Optimierungsverfahren triggern kann, bevor er auf (1) geht. Derartige Optimierungsverfahren sind nicht Teil der Erfindung.

Aufgrund von Mehrwege-Signalausbreitungen kann der Fall eintreten, dass der Empfänger das identische Datenfragment mehrfach empfängt. In diesem Fall ist es zweckmäßig, wenn das zeitlich später empfangene Datenfragment bei der Zusammenstellung der Datenfragmente zur Bildung des Datenpakets nicht berücksichtigt wird.

Das Verfahren gemäß der Erfindung bietet eine sich durch geringe Komplexität auszeichnende Lösung, die ein Sortieren von Fragmenten aus dem gleichen Original-Paket in einem System ermöglicht, in dem das Einkapselungsverfahren keine hinreichende Information bereitstellt, um die Pakete in dem Fragment-Header generell (für jede Anzahl von Fragmenten) zu sortieren. Zudem ist die Erfindung robust gegenüber der Präsenz duplizierter Fragmente.

Bei dem hier vorgeschlagenen Verfahren handelt es sich um eine intelligente Lösung zur Anwendung eines Einkapselungsverfahrens, das für Kommunikationssysteme definiert worden ist, bei denen eine Zufuhr von Fragmenten in richtiger Reihenfolge für einen Wiederzusammensetz-Vorgang vorausgesetzt wird, wobei diese neue Anwendung des Einkapselungsverfahrens in Kommunikationssystemen möglich ist, bei denen eine Zufuhr von Fragmenten in richtiger Reihenfolge für den Wiederzusammensetz-Vorgang nicht garantiert werden kann. Dies ist ein Vorteil, da durch eine neuartige Anwendung bereits existierender Technologien die Entwicklungskosten und Investitionsrisiken reduziert werden.

Zu beachten ist, dass das Frag_ID-Header-Feld nur eine begrenzte Länge hat, wie bei allen Protokoll-Headern der Fall ist. Typischerweise werden die Header-Felder so kurz wie möglich gehalten, um den Overhead zu minimieren. Dies impliziert, dass, falls ein Sender nach einiger Zeit sämtliche Frag_ID-Werte verwendet hat, der Sender wieder mit dem ersten Wert beginnt. Falls ein bestimmter Frag_ID-Wert für ein unterschiedliches Paket wiederverwendet wird und dabei der Sortierspeicher immer noch jedes Fragment mit dem gleichen ID_Vector gespeichert hat, wird dies von dem Sortiervorgang fälschlicherweise dahingehend interpretiert, dass beide Fragmente zu dem gleichen Paket gehören. Diese Unklarheit ist jedoch nur temporär und beeinträchtigt nicht die Leistungsfähigkeit des Sortierverfahrens: sobald das FIRST-Fragment empfangen worden ist, realisiert das Sortierverfahren, dass das "alte" Fragment einen tieferrangigen Zeitstempel als das eingetroffene FIRST-Fragment hat, und verwirft das "alte" Fragment; siehe Schritt (6.a).

Das hier vorgeschlagene Verfahren bietet eine intelligente Lösung zur neuartigen Anwendung eines Einkapselungsverfahrens, das für Kommunikationssysteme definiert worden ist, bei denen eine Zufuhr von Fragmenten in richtiger Reihenfolge für den Wiederzusammensetz-Vorgang angenommen wird, und zwar für Kommunikationssysteme, bei denen eine Zufuhr von Fragmenten in richtiger Reihenfolge für den Wiederzusammensetz-Vorgang nicht garantierbar ist. Der Vorteil dieser Lösung besteht darin, dass durch die neuartige Anwendung existierender Technologien eine Reduzierung von Entwicklungskosten und Investitionsrisiken ermöglicht wird.

Ferner ist diese Lösung sehr gut geeignet für Uplinks (oder Return Links bei Satellitensystemen), da sich die hinzugefügte Komplexität nur empfängerseitig vorhanden ist, Somit wird, falls das Verfahren speziell bei Uplinks (oder Return Links) angewandt wird, die Komplexität nur auf der Netz-Seite hinzugefügt, so dass die Kosten für Terminals und Energieverbrauch durch die Erfindung nicht nachteilig beeinflusst werden.

Die hier vorgeschlagene Erfindung ist besonders einfach und skalierbar, da bei ihr die Verwendung von Timern pro Sender und Paket vermieden werden kann.

Ein Beispiel für die Verwendung der Erfindung besteht in einem Kommunikationssystem, bei dem das E-SSA-Zugriffsverfahren mit RLE als Einkapselungsverfahren zur Unterstützung von IP-Verkehr implementiert ist,

Das E-SSA-Zugriffsverfahren involviert eine serielle Interferenz-Löschung auf der Empfängerseite, Die Sender senden in asynchroner Weise Pakete unter Verwendung großer Spreizcodes mit einem gewissen Offset (d.h. unter Verwendung eines beliebigen Teils des großen Spreizcodes). Folglich können sich Übertragungen von verschiedenen Sendern zeitlich überlappen und miteinander interferieren. Die Interferenz-Löschung erlaubt eine Rückgewinnung der gesendeten Pakete mit hinreichender Paket-Fehler-Raten-Leistungsfähigkeit, um tolerierbare Interferenzniveaus zu erzielen. Mit der Verwendung einer Interferenz-Löschung ist jedoch impliziert, dass die Zeit zum Rückgewinnen eines Pakets von dem Maß an Interferenz abhängt, die zu der Zeit auftrat, als das Paket gesendet wurde, da diese Interferenz die Anzahl erforderlicher Iterationen des Interferenz-Löschungsvorgangs beeinflusst. Somit ergeben sich für verschiedene Pakete verschiedene Zeiten zur Rückgewinnung, was seinerseits impliziert, dass Pakete, die von dem gleichen Sender gesendet werden, möglicherweise nicht in der gleichen Reihenfolge empfangen (d.h. korrekt rückgewonnen) werden können, in der sie gesendet wurden.

Zudem spezifiziert E-SSA keinerlei maximale Übertragungseinheitslänge, wobei jedoch kürzere Rahmen eine bessere Leistung bewirken. Um den IP-Verkehr über E-SSA zu stützen, kann möglicherweise eine Fragmentierung erforderlich sein, um kurze E-SSA-Rahmen zu ermöglichen.

Bei dieser Anwendungsmöglichkeit der Erfindung muss der E-SSA-Demodulator jedes empfangene Fragment mit einem Zeitstempel versehen, der die Zeit angibt, zu der das Paket an dem Empfänger eingetroffen ist. Ferner werden mit der Variation des in der S-MIM-Spezifikation vorgeschlagenen RLE-Header die folgenden Header-Felder bereitgestellt, die es ermöglichen, die vorstehend beschriebene Erfindung zum Sortieren von Fragmenten zu verwenden:
- Start_indicator - Feld (zu verwenden als *FIRST_flag*);
- End_indicator - Feld (zu verwenden als *END_flag*);
- MAC Adresse (IMSI oder TMSI, wie in den UMTS-Terminals);
- Fragment_ID.

Die Erfindung kann in drahtlosen Kommunikationssystemen vom terrestrischen Typ oder Satelliten-Typ verwendet werden.

**Abkürzungen**
- CRC: Cyclical Redundancy Check
- CDMA: Code Division Multiple Access
- DVB-RCS NG: Digital Video Broadcast Return Channel over Satellite Next Generation
- E-SSA: Enhanced Spread Spectrum Aloha
- IETF: Internet Engineering Task Force
- IMSI: International Mobile Subscriber Identity
- IP: Internet Protocol
- MAC: Medium Access Control
- MTU: Maximum Transmission Unit
- PPDU: Payload-adapted PDU
- RFC: Request for Comment
- RLE: Return Link Encapsulation
- SSA: Spread Spectrum Aloha
- TCP: Transmission Control Protocol
- TIMSI: Temporary Mobile Subscriber Identity
- UMTS: Universal Mobile Telephone System

## Patentansprüche

1. Verfahren zum Verarbeiten von Datenpaketen zwecks Zusammenführens der zu einem Datenpaket gehörenden Datenfragmente, wobei die Datenfragmente der Datenpakete von einer Vielzahl von Sendern eines Kommunikationssystems versendet und seitens eines Empfängers des Kommunikationssystems als die jeweiligen Datenfragmente enthaltene Empfangssignale empfangen werden und im Empfänger die zu einem Datenpaket gehörenden Datenfragmente nach Demodulation der Empfangssignale zu dem Datenpaket zusammengesetzt werden,
- wobei jedes Datenfragment neben Nutzdaten auch Steuerdaten aufweist, die die Gesamtlänge (Total_Length) des Datenpakets, den Sender (Tx_ID) des Datenfragments und das Datenpaket (Frag_ID) selbst identifizieren und darüber hinaus angeben, ob es sich bei dem Datenfragment um das erste und/oder um das letzte Datenfragment oder um ein mittleres Datenfragment zwischen dem ersten und dem letzten Datenfragment des Datenpakets handelt, und
- wobei die zeitliche Reihenfolge, in der die Datenfragmente von dem Empfänger empfangen werden, verschieden sein kann von der zeitlichen Reihenfolge, in der die Datenfragmente in dem Empfänger nach der Demodulation des Empfangssignals vorliegen,
wobei bei dem Verfahren
- in dem Empfänger in den Steuerdaten jedes Datenfragments eine den Zeitpunkt (T) des Empfangs des betreffenden Datenfragments repräsentierende Information abgelegt wird,
- die zu einem Datenpaket eines Senders gehörenden Datenfragmente durch Zwischenspeicherung gesammelt werden, bis sämtliche Datenfragmente des Datenpakets empfangen sind, und
- aus den empfangenen Datenfragmenten anhand der Steuerdaten die zu einem Datenpaket eines Senders gehörenden Datenfragmente zusammengesetzt werden indem
- zur Bildung des Datenpakets diese Datenfragmente auf Basis ihrer in ihren Steuerdaten abgelegten, die jeweiligen Empfangszeitpunkte (T) repräsentierenden Information zeitlich aufeinanderfolgend sortiert zusammengesetzt werden.

2. Verfahren nach Anspruch 1, **dadurch gekennzeichnet, dass** dann, wenn ein Datenfragment, welches Steuerdaten und Nutzdaten aufweist, die identisch mit den Steuerdaten und Nutzdaten eines bereits zuvor empfangenen Datenfragments sind, das zeitlich später empfangene Datenfragment bei der Zusammenstellung der Datenfragmente zur Bildung des Datenpakets unberücksichtigt bleibt.

## Claims

1. A method for processing data packets for the purpose of combining the data fragments belonging to a data packet, wherein the data fragments of the data packets are sent by a plurality of transmitters of a communication system and are received by a receiver of the communication system as received signals containing the respective data fragments, and wherein, in the receiver, the data fragments belonging to a data packet are combined into the data packet after demodulation of the received signals,
- wherein, besides user data, each data fragment also comprises control data that identify the total length (Total_Length) of the data packet, the transmitter (Tx_ID) of the data fragment and the data packet (Frag_ID) itself and further indicate, whether the data fragment is the first and/or the last data fragment or an intermediate data fragment between the first and the last data fragment of the data packet, and
- wherein the chronological sequence in which the data fragments are received by the receiver can differ from the chronological sequence in which the data fragments are present in the receiver after demodulation of the received signal,
wherein in the method
- in the receiver, information is stored in the control data of each data fragment, said information representing the time (T) of receipt of the respective data fragment,
- the data fragments belonging to a data packet of a transmitter are gathered by latching, until all data fragments of the data packets have been received, and
- the data packets belonging to a data packet of a transmitter being combined from the received data fragments on the basis of the control data by
- combining these data fragments in a chronologically sequential order to form the data packet, said order being based on the information stored in their control data and representing the respective time of receipt (T).

2. The method of claim 1, **characterized in that** when a data fragment having control data and user data that are identical with control data and user data of a data fragment already received before, the data fragment received at a later time is not considered in combining the data fragments to form the data packet.

## Revendications

1. Procédé de traitement de paquets de données à des fins de regroupement des fragments de données appartenant à un paquet de données, dans lequel les fragments de données des paquets de données sont envoyés par une pluralité d'émetteurs d'un système de communication et sont reçus par un récepteur du système de communication sous forme de signaux de réception contenant les fragments de données respectifs et, dans le récepteur, les fragments de données appartenant à un paquet de données sont assemblés après démodulation des signaux de réception pour former le paquet de données,
- chaque fragment de données présentant, outre des données utiles, également des données de commande qui identifient elles-mêmes la longueur totale (Total_Length) du paquet de données, l'émetteur (Tx_ID) du fragment de données et le paquet de données (Frag_ID) et qui indiquent, en outre, si le fragment de données est le premier et/ou le dernier fragment de données ou bien un fragment de données médian entre le premier et le dernier fragment de données du paquet de données, et
- l'ordre chronologique dans lequel sont reçus les fragments de données par le récepteur pouvant être différent de l'ordre chronologique dans lequel sont présents les fragments de données dans le récepteur après démodulation du signal de réception,
procédé dans lequel
- dans le récepteur, une information représentant l'instant (T) de la réception du fragment de données concerné est enregistrée dans les données de commande de chaque fragment de données,
- les fragments de données appartenant à un paquet de données d'un émetteur sont assemblés par stockage intermédiaire jusqu'à ce que soient reçus tous les fragments de données du paquet de données, et
- les fragments de données appartenant à un paquet de données d'un émetteur sont regroupés à partir des fragments de données reçus à l'aide des données de commande,
- en regroupant et en triant de manière séquentielle ces fragments de données pour former le paquet de données sur la base de leur information enregistrée dans leurs données de commande et représentant les instants de réception (T) respectifs.

2. Procédé selon la revendication 1, **caractérisé en ce que**, lorsqu'un fragment de données comportant des données de commande et des données utiles qui sont identiques aux données de commande et données utiles d'un fragment de données déjà reçu précédemment, le fragment de données reçu ultérieurement n'est pas pris en compte lors du regroupement des fragments de données pour former le paquet de données.
